# EUROPEAN PATENT SPECIFICATION

(11) **EP 1 586 409 B1**
(45) Date of publication and mention of the grant of the patent: **03.12.2008**
(21) Application number: 05252185.3
(22) Date of filing: 07.04.2005
(51) Int. Cl.: B23K 37/00, B23K 3/08, F16L 57/04, A62C 2/06

(54) **Heat protective articles**
Thermische Schutzvorrichtung
Dispositif de protection thermique

(30) Priority: 13.04.2004 GB 0408220
(43) Date of publication of application: 19.10.2005
(73) Proprietor: Thomas, Dean William, Northfleet, Kent DA13 9JO (GB)
(72) Inventor: Thomas, Dean William, Northfleet, Kent DA13 9JO (GB)
(74) Representative: Jacob, Reuben Ellis

(56) References cited:
- GB-A- 751 910
- GB-A- 2 103 331
- US-A- 5 241 154
- US-A- 6 161 590

## Description

### Field of the Invention

The invention relates to heat protective articles and particularly to heat protective articles for placing in proximity to an elongate member to protect the surrounding area from damage by a flame, or the like, when heat is applied to the elongate member.

### Background to the Invention

When installing pipework for conveying fluids (such as water) or gases (such as natural gas) joints are often made by soldering. This usually involves applying heat by means of a flame, although the necessary heat can be applied by other means, such as an electric hot air gun. If the pipework is adjacent a wall, or passes through an item of furniture, it is desirable to do the joining work with the pipework remote from these locations. However, this is not always possible and when the work is carried out *in situ*, there is a danger the wall, or furniture item, will be damaged by the applied heat.

When installing kitchen furniture, it is often necessary to plumb in a water supply to tap fittings at a sink, or a gas supply to a cooker. In either case, it is often necessary to carry out soldering operations inside a kitchen furniture item. The person installing the pipework has to take great care to avoid damaging the kitchen furniture and will not always be successful in doing so.

US 6161 590 discloses a portable weld-windguard for use on a pipe.

### Summary of the Invention

An object of the invention is to provide a heat protective article that will make it easier to reduce the damage done to the surrounding environment during a soldering operation.

The invention provides a heat protective article comprising a heat protective article comprising a mat made of a heat resistant material, characterised in that said mat is provided with a through-hole, an opening extending between a first edge of said mat and said through-hole and a flap for selectively covering said opening.

The invention also provides a method of protecting an adjacent surface, or surfaces, during the application of heat to a pipe, said method comprising fitting a heat protective article as specified in the last preceding paragraph around said pipe by inserting said pipe into said through-hole via said opening end covering said opening with said flap.

The invention also includes a heat protective article comprising a mat made of a heat resistant material, said mat having a through-hole, an opening extending between a first edge of said mat and said through-hole.

The invention also includes a method of protecting an adjacent surface, or surfaces, during the application of heat to a pipe, said method comprising fitting a protective article as specified in the last preceding paragraph around said pipe by inserting said pipe into said through-hole via said opening.

### Brief Description of the Drawings

In order that the invention may be well understood, some embodiments thereof, which are given by way of example only, will be described with reference to the drawings, in which:
Figure 1 is a plan view of a first embodiment of a heat protective article according to the invention;
Figure 2 is an end elevation of the protective article shown in Figure 1;
Figure 3 is a plan view of a second embodiment of a heat protective article according to the invention;
Figure 4 is a plan view of a third embodiment of a heat protective article according to the invention; and
Figure 5 is a plan view of a fourth embodiment of a heat protective article according to the invention.

### Detailed Description of the Preferred Embodiments

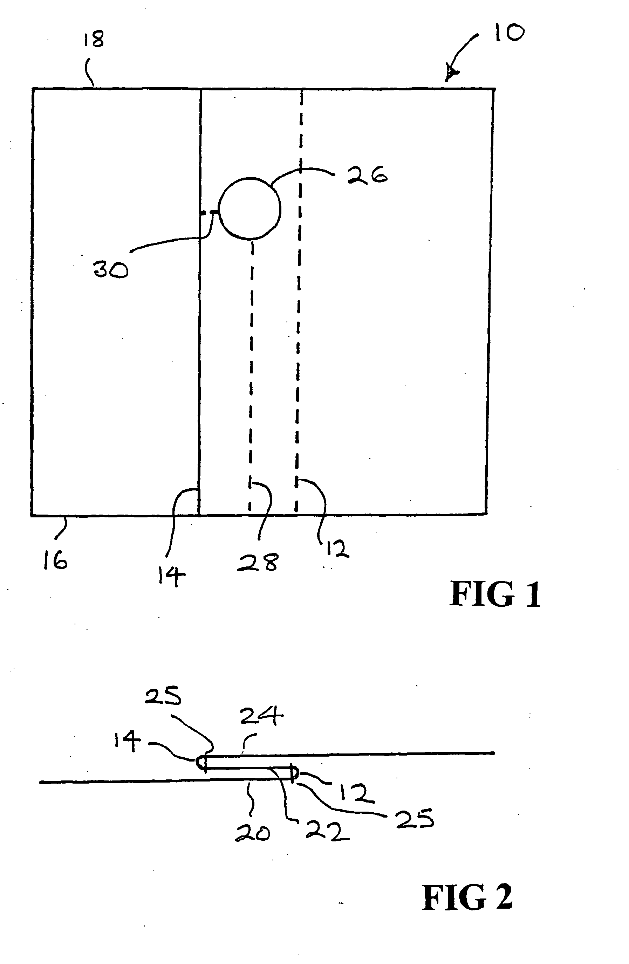

Referring to Figures 1 and 2, a heat protective article 10 comprises a substantially rectangular mat made of a heat resistant material. The material may be, for example, glass fibre material, such as the glass fibre fabrics available from Heatsafe Products Ltd. The material will typically be able to resist heat up to temperatures of 600 to 650°C.

The mat is folded over twice to provide fold lines 12 and 14 that extend in substantially parallel spaced apart relation between opposed edges 16, 18 of the mat. The folds provide a triple layer of matting comprising a lower layer 20, mid-layer 22 and a top layer 24. This can best be seen in Figure 2, which is entirely schematic with the spacing between the layers exaggerated for ease of illustration. Stitching may be provided, as indicated at 25, to maintain the folds 12, 14. The stitching 25 may be continuous along the length of the folds, or at discrete locations along the folds.

A circular through-hole 26 is provided in the mat and penetrates all three layers 20, 22, 24. The through-hole can be provided at any location where it will penetrate the three layers 22, 24, 26, but is preferably situated closer to the edge 18 than the edge 16. A slit 28 is provided in the lower layer 20 extending between the edge 16 and the through-hole 26. This slit is covered by the layers 22, 24, which define a flap for selectively covering the slit. A second slit 30 is provided in the layers 22, 24 extending from the fold 14 to the through-hole 26. Preferably, the slit 28 will extend generally parallel to the folds 12, 14 and the second slit 30 will extend substantially perpendicular to the slit 28 as shown. However, this is not essential.

Preferably, the through-hole 26 has a diameter of 15 mm to fit around standard copper piping used for domestic plumbing. However, in principle, the hole can be of any size and shape for fitting around a desired elongate object.

In use, a plumber or the like, folds the layers 22, 24 back along the line of the fold 12 to expose the slit 28. A pipe (not shown) can then be worked along the slit 28, starting at the edge 16 until it is received in the through-hole 26 in the lower layer 20. The layers 22, 24 are then folded back to a position in which they lie on top of the layer 29, with the pipe pushed through the second slit 30 to bring it into the through-hole 26 in the layers 22, 24. With the mat thus fitted around the pipe, it can be manipulated so that the surfaces around the pipe, for example, shelves or upright panels of an item of kitchen furniture, or an adjacent wall, are covered and protected against heat applied to solder a joint in the pipe.

It will be noted that the arrangement of the folds 12, 14 and slits 28, 30 is such that at least one of the three layers 20, 22, 24 is not penetrated by the slits and thus if the slit tends to open when fitted, there will still be a continuous layer of material to bridge the slit.

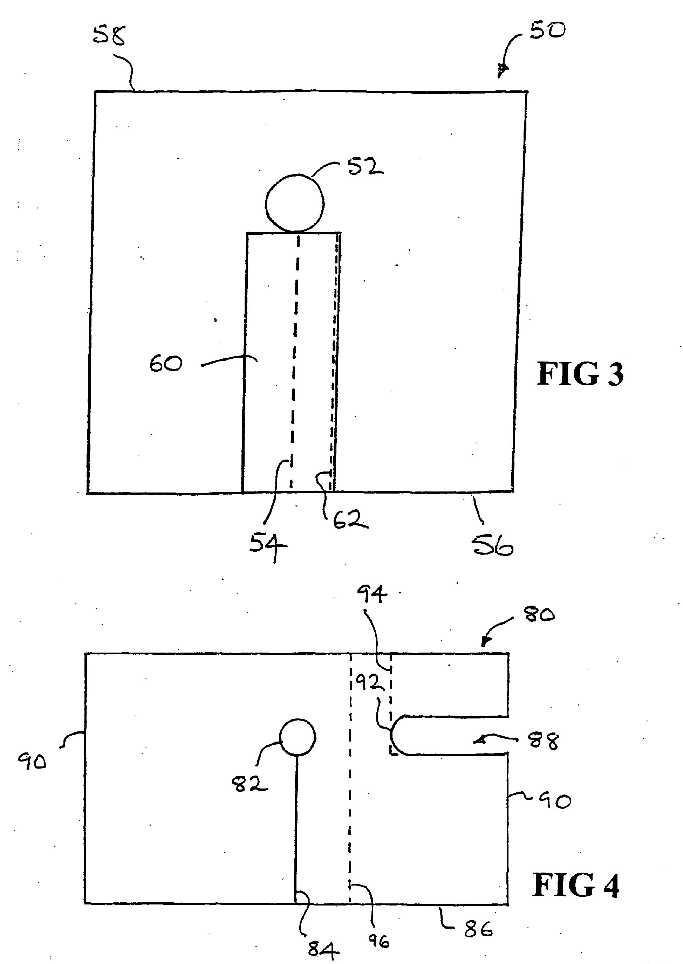

The heat protective article 50 shown in Figure 3 comprises a mat of heat resistant material in the same way as the protective article 10. The mat has a through-hole 52 shaped and sized for receiving an elongate article as desired, for example a hole for a 15 mm diameter pipe. A slit 54 extends from an edge 56 of the mat to the through-hole 52. As with the through-hole 26 in the first embodiment, the through-hole 52 can be located at any desired position, but is preferably closer to the edge 58 opposite the edge 56 than it is to the edge 56.

A flap 60, preferably made from the same material as the mat, is arranged to cover the slit 54. The flap 60 is preferably secured to the mat by heat-resistant stitching 62, but other attaching means, such as metal studs, could be used.

In use, the mat is fitted around a pipe by lifting the flap 60 to expose the slit 54. Once fitted, the flap can be returned so that it covers the slit.

In a further embodiment illustrated in Figure 4, a heat protective article 80 comprises a mat made of a heat resistant material as described in connection with the previous embodiments. A through-hole 82 is provided in the mat and an opening, in the form of a slit 84 extends from one edge 86 of the mat to the through-hole. A notch, or opening 88, extends inwardly from one of the edges 90 of the mat that extends transverse to the edge 86. The edges 90 extend generally parallel to the slit 84. The notch 88 has a width corresponding substantially to the diameter of the through-hole 82 and a radiussed inner end 92 having a radius corresponding substantially to that of the through-hole. In use, once the pipe to be soldered has been inserted into the through-hole 82 via the slit 84, the plumber folds the notched edge 90 over towards the opposite edge 90 (along the dashed line 96) bringing the inner end 92 of the notch into proximity with the pipe. In this way, a flap, or layer of mat, is provided over the slit 84.

It will be understood that in a modification of the heat protective article 80, the notch could take the form of a cut-out of one corner, as illustrated by dashed line 94. Alternatively, the notch could be a keyhole shape, defined by a slit leading from the edge 90 to an aperture.

It will be understood that the heat protective articles shown in Figures 3 and 4 could be made more flexible by providing more than one through-hole, with respective slits connecting the through-hole to an edge, or edges, of the mat, and respective flaps, or notches, to allow for covering those slits.

It will be appreciated that reinforcement, by way of heat resistant stitching, or otherwise, may be provided along the cut edges of the mat, such as along the sides of the slits leading to the through-hole(s) or the notch 88.

It will be appreciated that the heat protective articles shown in the drawings might be provided with a fastener arrangement for holding the mat with the slit covered during the heat application process. This would serve to more securely hold the article around the pipe, or the like, during the heat application process. The fastener arrangement might comprise metal press-studs and merely needs to be able to stand heat sufficiently well for the intended application. In a presently preferred embodiment, heat resistant hook and fastener strips of the type sold under the tradename Velcro® are used.

The mat will typically be rectangular and may, for example, be 300 x 250 mm or 300 x 300 mm. However, the mat may, in principle, be any desired shape and could, for example, be circular.

It will be appreciated that although the opening leading to the through-hole is preferably a slit as described in connection with the embodiments, it may be wider than a slit if desired.

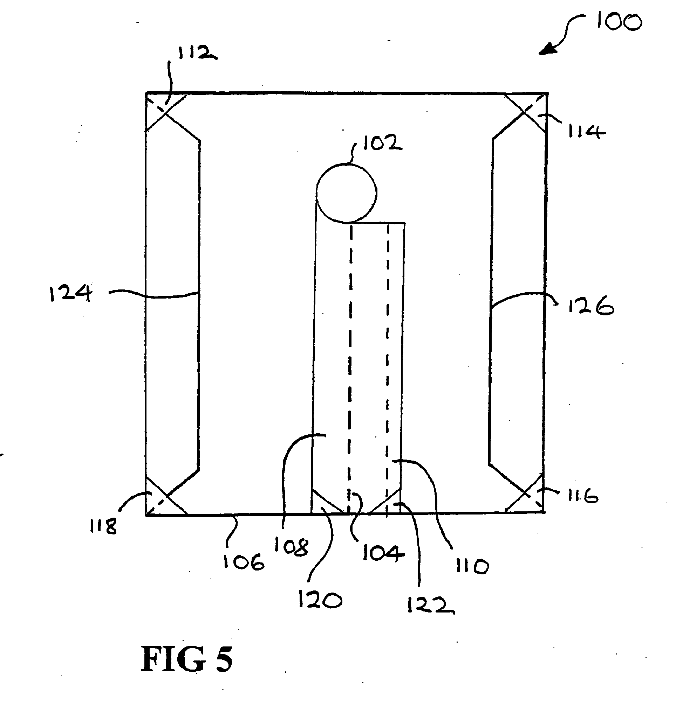

Figure 5 shows a heat protective article 100 that includes additional features that may be incorporated in any of the articles 10, 50 and 80 previously described.

The heat protective article 100 is a substantially rectangular mat made of a heat resistant material and has a through-hole 102 and a slit 104 extending from an edge 106 of the mat to the through-hole. A flap 108, preferably made of the same material as the mat, is provided for covering the slit. The flap 108 is preferably attached to the mat by heat-resistant stitching provided along the left-hand side of the flap (as viewed in Figure 3), although other attaching means, such as metal press-studs, could be used.

One half of a hook and loop fastener material 110 of the Velco-type is provided along the right-hand side of the flap 108. The other half of the fastener material (not shown) is attached to the mat so that it faces the half 110. As shown, a strip of the fastener material extends the whole length of the flap 108. However, as one alternative, two separate pieces may be provided, with one positioned adjacent the through-hole 102 and the other positioned adjacent the edge 106.

Respective pockets 112, 114, 116, 118 are formed at the corners of the mat by attaching triangular pieces of material at the corners. The triangular pieces of material are preferably made of the same material as the mat and attached by heat-resistant stitching. In a similar fashion opposed pockets 120, 122 are provided on the flap 108 adjacent the edge 106

Stiffening rods 124, 126 are provided for fitting in the pockets 112 to 122. The stiffening rods 124, 126 respectively extend between the pockets 112, 118 and 114, 116. In Figure 5, only two such rods are shown. However, the skilled person will appreciate that in an analogous fashion, respective stiffening rods may extend between the pockets 112, 114, the pockets 118, 120 and the pockets 116, 122. The stiffening rods are preferably made of are resilient circular section steel rodding. The stiffening rods are configured such that they can readily be bent to shorten their length to allow them to fit into the pockets and once in their pockets will resile to their normal length to provide a brace, or stiffener, for the mat. The skilled person will appreciate that although steel stiffening rods are presently preferred, stiffening members of any suitable shape and material may be used.

The stiffening rods can, for example, advantageously be used where the heat protective article is to be used to shield the area around a horizontal pipe to which heat is to be applied. It will be appreciated that some of the rods may be fitted in their pockets prior to fitting the heat protective article around the pipe, or all may be fitted once the mat is in place. Once fitted, the stiffening rods prevent the mat from folding over, thereby providing a semi-stiff screen.

In Figure 5, two pockets 120, 122 are provided on the flap 108. Alternatively, pockets may be provided behind the pockets 116, 118 on the opposite side of the mat.

As a modificant to what is shown in Figure 5, pockets can be provided at intermediate positions along the edges of the mat. These could be used in conjunction with stiffening rods or members formed with, for example, a 90° bend, so that the mat can be stiffened in such a way as to maintain a partially-folded state.

Although the heat protective article is intended primarily for use by plumbers soldering pipework, it is not limited to such use and may be used generally for protecting surfaces around an elongate element to which heat is to be applied.

## Claims

1. A heat protective article (10;20;80;100) comprising a mat made of a heat resistant material, **characterised in that** said mat is provided with a through-hole (26;52;82;102), an opening (28;54;84;104) extending between a first edge (16;56;86;106) of said mat and said through-hole and allowing a pipe to be inserted in the through-hole via said opening, and a flap (22,24;60;108) for selectively covering said opening.

2. A heat protective article as claimed in claim 1, wherein said opening is a slit.

3. A heat protective article as claimed in claim 1 or 2, wherein said mat is generally rectangular in shape.

4. A heat protective article as claimed in claim 1, 2 or 3, wherein said flap (60;108) is secured to said mat.

5. A heat protective article as claimed in claim 1, 2 or 3, wherein said mat comprises two folds extending between opposed edges of the mat and in spaced apart relation, said folds defining said flap (22,24).

6. A heat protective article as claimed in claim 5, wherein said through-hole (26) passes through said flap.

7. A heat protective article as claimed in claim 6, wherein said flap is provided with an opening (30) extending from an edge thereof to said through-hole.

8. A heat protective article as claimed in claim 1, 2 or 3, wherein said mat has a cut-out portion (88) arranged such that, in use, the mat can be folded along a line (96) extending from said first edge (86) of the mat to a second edge of said mat that is opposite said first edge to bring a portion of said mat into overlying relationship with said opening (82) with said cut-out overlying said through-hole, said portion of said mat defining said flap.

9. A heat protective article as claimed in any one of the preceding claims, wherein said heat resistant material comprises woven glass fibres.

10. A heat protective article as claimed in any one of the preceding claims, wherein said heat resistant material is heat resistant to at least 600°C.

11. A heat protective article as claimed in any one of the preceding claims, consisting of said mat.

12. A heat protective article as claimed in any one of claims 1 to 10, wherein said mat is provided with at least two apertures (112-122) and further comprising at least one stiffening member (124,126) having ends fittable into said apertures such that the member can be fitted between two said apertures to stiffen the mat between said two apertures.

13. A heat protective article as claimed in claim 12, wherein said apertures are pockets (112-122) formed on the mat.

14. A heat protective article as claimed in any one of the preceding claims, wherein one edge of said flap (108) is hingeably secured to said mat and further comprising a hook and loop fastener, a first part (110) of said hook and loop fastener being provided on said flap and a second part of said hook and loop fastener being provided on an opposed surface of said mat whereby the flap is releasably securable against the mat.

15. A method of protecting an adjacent surface, or surfaces, during the application of heat to a pipe, said method comprising fitting a heat protective article as claimed in any one of claims 1 to 11, around said pipe by inserting said pipe into said through-hole via said opening and covering said opening with said flap.

16. A method as claimed in claim 15, wherein said mat is provided with at least two apertures (112-122), further comprising fitting a first end of a stiffening member (124,126) into one said aperture and a second end of the stiffening member into a second said aperture to stiffen the mat between said two apertures.

## Patentansprüche

1. Wärmeschutzgegenstand (10; 20; 80; 100), umfassend eine Matte, die aus einem wärmebeständigen Material gefertigt ist, **dadurch gekennzeichnet, dass** die Matte mit einem Durchgangsloch (26; 52; 82; 102) versehen ist, wobei eine Öffnung (28; 54; 84; 104) zwischen einer ersten Kante (16; 56; 86; 106) der Matte und dem Durchgangsloch verläuft und ein Rohr durch die Öffnung in das Durchgangsloch eingesetzt werden kann, und eine Klappe (22; 24; 60; 108) zum selektiven Abdecken der Öffnung.

2. Wärmeschutzgegenstand nach Anspruch 1, wobei die Öffnung ein Schlitz ist.

3. Wärmeschutzgegenstand nach Anspruch 1 oder 2, wobei die Matte eine im Allgemeinen rechteckige Form aufweist.

4. Wärmeschutzgegenstand nach Anspruch 1, 2 oder 3, wobei die Klappe (60; 108) an der Matte befestigt ist.

5. Wärmeschutzgegenstand nach Anspruch 1, 2 oder 3, wobei die Matte zwei Falten umfasst, die zwischen gegenüberliegenden Kanten der Matte in einer beabstandeten Beziehung verlaufen, wobei die Falten die Klappe (22, 24) definieren.

6. Wärmeschutzgegenstand nach Anspruch 5, wobei das Durchgangsloch (26) durch die Klappe geht.

7. Wärmeschutzgegenstand nach Anspruch 6, wobei die Klappe mit einer Öffnung (30) versehen ist, die von einer Kante davon zu dem Durchgangsloch verläuft.

8. Wärmeschutzgegenstand nach Anspruch 1, 2 oder 3, wobei die Matte einen ausgeschnittenen Abschnitt (88) aufweist, der derart angeordnet ist, dass die Matte während der Verwendung entlang einer Linie (96) gefaltet werden kann, die von der ersten Kante (86) der Matte zu einer zweiten Kante der Matte verläuft, die der ersten Kante gegenüberliegt, um einen Abschnitt der Matte in eine überlappende Beziehung zu der Öffnung (82) zu bringen, wobei der Ausschnitt das Durchgangsloch überlagert, wobei der Abschnitt der Matte die Klappe definiert.

9. Wärmeschutzgegenstand nach einem der vorhergehenden Ansprüche, wobei das wärmebeständige Material Glasfasergewebe umfasst.

10. Wärmeschutzgegenstand nach einem der vorhergehenden Ansprüche, wobei das wärmebeständige Material bis auf mindestens 600 °C wärmebeständig ist.

11. Wärmeschutzgegenstand nach einem der vorhergehenden Ansprüche, der aus der Matte besteht.

12. Wärmeschutzgegenstand nach einem der Ansprüche 1 bis 10, wobei die Matte mit mindestens zwei Öffnungen (112-122) versehen ist und ferner mindestens ein Versteifungsglied (124, 126) umfasst, das Enden aufweist, die in die Öffnungen derart eingepasst werden können, dass das Glied zwischen die zwei Öffnungen eingepasst werden kann, um die Matte zwischen den zwei Öffnungen zu versteifen.

13. Wärmeschutzgegenstand nach Anspruch 12, wobei die Öffnungen Taschen (112-122) sind, die auf der Matte ausgebildet sind.

14. Wärmeschutzgegenstand nach einem der vorhergehenden Ansprüche, wobei eine Kante der Klappe (108) an der Matte gelenkig verbunden ist, und ferner einen Haken- und Ösenverschluss umfasst, wobei ein erster Teil (110) des Haken- und Ösenverschlusses auf der Klappe vorgesehen ist und ein zweiter Teil des Haken- und Ösenverschlusses auf einer gegenüberliegenden Oberfläche der Matte vorgesehen ist, wodurch die Klappe an der Matte lösbar befestigt werden kann.

15. Verfahren zum Schützen einer benachbarten Oberfläche oder Oberflächen während der Anwendung von Wärme auf ein Rohr, wobei das Verfahren das Passen eines Wärmeschutzgegenstands nach einem der Ansprüche 1 bis 11 um das Rohr durch Einsetzen des Rohrs in das Durchgangsloch durch die Öffnung und Abdecken der Öffnung mit der Klappe umfasst.

16. Verfahren nach Anspruch 15, wobei die Matte mit mindestens zwei Öffnungen (112-122) versehen ist, und ferner umfassend das Passen eines ersten Endes eines Versteifungsglieds (124, 126) in die eine Öffnung und eines zweiten Endes des Versteifungsglieds in die zweite Öffnung, um die Matte zwischen den zwei Öffnungen zu versteifen.

## Revendications

1. Dispositif de protection thermique (10 ; 20 ; 80 ; 100) comprenant une nappe constituée d'un matériau résistant à la chaleur, **caractérisé en ce que** ladite nappe est dotée d'un trou de passage (26 ; 52 ; 82 ; 102), une ouverture (28 ; 54 ; 84 ; 104) s'étendant entre un premier bord (16 ; 56 ; 86 ; 106) de ladite nappe et ledit trou de passage et permettant à un conduit d'être inséré dans le trou de passage par l'intermédiaire de ladite ouverture et un volet (22 ; 24 ; 60 ; 108) servant à couvrir de façon sélective ladite ouverture.

2. Dispositif de protection thermique selon la revendication 1, dans lequel ladite ouverture est une fente.

3. Dispositif de protection thermique selon la revendication 1 ou 2, dans lequel ladite nappe est généralement de forme rectangulaire.

4. Dispositif de protection thermique selon la revendication 1, 2 ou 3, dans lequel ledit volet (60 ; 108) est fixé à ladite nappe.

5. Dispositif de protection thermique selon la revendication 1,2 ou 3, dans lequel ladite nappe comporte deux replis s'étendant entre des bords opposés de la nappe et en relation d'espacement, lesdits replis définissant ledit volet (22, 24).

6. Dispositif de protection thermique selon la revendication 5, dans lequel ledit trou de passage (26) traverse ledit volet.

7. Dispositif de protection thermique selon la revendication 6, dans lequel ledit volet est doté d'une ouverture (30) s'étendant de l'un de ses bords audit trou de passage.

8. Dispositif de protection thermique selon la revendication 1, 2 ou 3, dans lequel ladite nappe présente une partie de découpe (88) agencée de telle façon que, quand on l'utilise, la nappe peut être pliée le long d'une ligne (96) s'étendant dudit premier bord (86) de la nappe à un second bord de ladite nappe qui se trouve opposé audit premier bord en vue de mettre une partie de ladite nappe en relation de superposition avec ladite ouverture (82), ladite découpe recouvrant ledit trou de passage, ladite partie de ladite nappe définissant ledit volet.

9. Dispositif de protection thermique selon l'une quelconque des revendications précédentes, dans lequel ledit matériau résistant à la chaleur comporte des fibres de verre tissées.

10. Dispositif de protection thermique selon l'une quelconque des revendications précédentes, dans lequel ledit matériau résistant à la chaleur est résistant à la chaleur jusqu'à au moins 600°C.

11. Dispositif de protection thermique selon l'une quelconque des revendications précédentes, constitué de ladite nappe.

12. Dispositif de protection thermique selon l'une quelconque des revendications 1 à 10, dans lequel ladite nappe est dotée d'au moins deux ouvertures (112-122) et comprenant, de plus, au moins un élément de renforcement (124, 126) comportant des extrémités pouvant s'ajuster dans lesdites ouvertures de telle sorte que l'élément puisse être ajusté entre deux dites ouvertures afin de renforcer la nappe entre les deux dites ouvertures.

13. Dispositif de protection thermique selon la revendication 12, dans lequel lesdites ouvertures sont des poches (112-122) formées sur la nappe.

14. Dispositif de protection thermique selon l'une quelconque des revendications précédentes, dans lequel un bord dudit volet (108) est fixé de façon articulée à ladite nappe et comprend, de plus, un dispositif de fixation à crochet et à boucle, une première partie (110) dudit dispositif de fixation à crochet et à boucle étant fournie sur ledit volet et une seconde partie dudit dispositif de fixation à crochet et à boucle étant fournie sur une surface opposée de ladite nappe de sorte que ledit volet puisse être fixé de façon libérable contre la nappe.

15. Procédé de protection d'une surface, ou de surfaces, adjacente(s), pendant l'application de chaleur sur un conduit, ledit procédé consistant à ajuster un dispositif de protection thermique selon l'une quelconque des revendications 1 à 11, autour dudit conduit en insérant ledit conduit dans ledit trou de passage par l'intermédiaire de ladite ouverture et en recouvrant ladite ouverture avec ledit volet.

16. Procédé selon la revendication 15, dans lequel ladite nappe est prévue avec au moins deux ouvertures (112-122), consistant, de plus, à ajuster une première extrémité d'un élément de renforcement (124, 126) dans une première dite ouverture et une seconde extrémité de l'élément de renforcement dans une seconde dite ouverture afin de renforcer la nappe entre les deux dites ouvertures.
